# EUROPÄISCHE PATENTANMELDUNG

(11) **EP 3 860 076 A1**
(43) Veröffentlichungstag der Anmeldung: **04.08.2021**
(21) Anmeldenummer: 20154177.8
(22) Anmeldetag: 28.01.2020
(51) Int. Cl.: H04L 29/06

(54) **ERKENNUNG UND ABWEHR NETZBASIERTER ANGRIFFE**

(71) Anmelder: Siemens Aktiengesellschaft, 80333 München (DE)
(72) Erfinder: Beyer, Frank, 92546 Schmidgaden (DE); Blome, Abian Manuel, 81541 München (DE); Hick, Walter, 90602 Seligenporten (DE); Pröll, Thomas, 81737 München (DE); Schattleitner, Angela, 83104 Tuntenhausen (DE); Wallner, Sebastian, 81827 München (DE); Wimmer, Martin, 85579 Neubiberg (DE)

(57) **Zusammenfassung**

Computerimplementiertes Verfahren zur Erkennung und Abwehr netzbasierter Angriffe in einem Netzwerksystem, das ein erstes Teilnetzwerk (PN), ein zweites Teilnetzwerk (HN) und eine Steuereinheit (SDNC) zum Konfigurieren von Netzwerkgeräten des ersten Teilnetzwerks und des zweiten Teilnetzwerks umfasst, mit den Schritten: Detektieren (S2) eines unzulässigen Datenverkehrs des ersten Teilnetzwerks anhand eines vorgegebenen netzwerkspezifischen Kommunikationsmusters, Generieren (S3) einer Risikoinformation abhängig vom detektierten unzulässigen Datenverkehr, Generieren (S4) einer Konfigurationsinformation für das Netzwerksystem abhängig von der Risikoinformation, wobei die Konfigurationsinformation mindestens eine Konfigurationsregel für mindestens ein Netzwerkgerät zum Umleiten des detektierten unzulässigen Datenverkehrs an das zweite Teilnetzwerk (HN) umfasst, und Konfigurieren (S5) von mindestens einem Netzwerkgerät des ersten Teilnetzwerks und/oder einem Netzwerkgerät (NWG) des zweiten Teilnetzwerks durch die Steuereinheit (SDNC) gemäß der Konfigurationsinformation, derart dass der detektierte unzulässige Datenverkehr an das zweite Teilnetzwerk (HN) geleitet wird.

## Beschreibung

Die Erfindung betrifft ein computerimplementiertes Verfahren, ein Netzwerksystem und ein Computerprogrammprodukt zur Erkennung und Abwehr netzbasierter Angriffe, beispielsweise auf Information Technology (IT) und Operation Technology (OT) Infrastrukturen.

Um Angriffe auf Netzwerksysteme zu erkennen und/oder abzuwehren, müssen Schutzmaßnahmen eingerichtet werden, die verhindern, dass Angreifer unberechtigten Zugriff auf Infrastruktur und Daten erlangen. Es sind beispielsweise sogenannte Deception-Technologien bekannt, deren Ziel es ist, Angreifer zu täuschen und von Angriffszielen abzulenken. Solche Deception-Technologien können beispielsweise mit Pseudo-Daten als Köder (engl. Decoys), Täuschungs-Hosts (engl. Honey Pot) oder Täuschungs-Netzwerken (engl. Honeynet) realisiert werden. Damit können beispielsweise Angriffstaktiken von Angreifern auf Netzwerkebene analysiert werden, um einen potenziellen Schaden von produktiven Netzen abzuhalten. In der Regel wird ein derartiges Honeynet in Hardware aufgebaut und die Umleitung von Netzwerkverkehr auf das Honeynet zur Analyse erfordert in der Regel manuelle Eingriffe in das Routing im produktiven Netzwerk.

Es ist eine Aufgabe der Erfindung, das Erkennen, Analysieren und Abwehren von netzwerkbasierten Angriffen zu vereinfachen.

Die Aufgabe wird durch die in den unabhängigen Ansprüchen beschriebenen Maßnahmen gelöst. In den abhängigen Ansprüchen sind vorteilhafte Weiterbildungen der Erfindung dargestellt.

Gemäß einem ersten Aspekt betrifft die Erfindung ein computerimplementiertes Verfahren zur Erkennung und Abwehr netzbasierter Angriffe in einem Netzwerksystem, das ein erstes Teilnetzwerk, ein zweites Teilnetzwerk und eine Steuereinheit zum Konfigurieren von Netzwerkgeräten des ersten Teilnetzwerks und des zweiten Teilnetzwerks umfasst, mit den Schritten:
- Detektieren eines unzulässigen Datenverkehrs des ersten Teilnetzwerks anhand eines vorgegebenen netzwerkspezifischen Kommunikationsmusters,
- Generieren einer Risikoinformation abhängig vom detektierten unzulässigen Datenverkehr,
- Generieren einer Konfigurationsinformation für das Netzwerksystem abhängig von der Risikoinformation, wobei die Konfigurationsinformation mindestens eine Konfigurationsregel für mindestens ein Netzwerkgerät zum Umleiten des detektierten unzulässigen Datenverkehrs an das zweite Netzwerk umfasst,
   und
- Konfigurieren von mindestens einem Netzwerkgerät des ersten Teilnetzwerks und/oder einem Netzwerkgerät des zweiten Teilnetzwerks durch die Steuereinheit gemäß der Konfigurationsinformation, derart, dass der detektierte unzulässige Datenverkehr an das zweite Teilnetzwerk geleitet wird.

Das Netzwerksystem kann insbesondere als Software-Defined-Networking-Infrastruktur (kurz SDN) eingerichtet sein. Die Detektion des unzulässigen Datenverkehrs kann insbesondere mittels eines Intrusion-Detection-Systems (kurz IDS) erfolgen.

Es ist ein Vorteil der vorliegenden Erfindung, dass damit auf netzbasierte Angriffe schneller reagiert werden, da illegitimer Netzwerkverkehr von bekanntem und erlaubten Verkehr dynamisch getrennt und an ein zweites Teilnetzwerk, z.B. ein Honeynet, umgeleitet werden kann. So kann das erste Teilnetzwerk ohne Einschränkungen weiter betrieben werden, wobei im zweiten Teilnetzwerk eine isolierte Angriffsanalyse erfolgen kann. Dies ermöglicht insbesondere eine Live-Überwachung des ersten Teilnetzwerks. Ein illegitimer Datenverkehr kann insbesondere anhand einer Übereinstimmung mit Angriffsmustern detektiert und/oder als unbekannter Datenverkehr registriert werden.

Die Konfiguration der Netzwerkgeräte des ersten und/oder zweiten Teilnetzwerks kann insbesondere unmittelbar, d.h. zeitnah, erfolgen. So kann durch die Umleitung des unzulässigen Datenverkehrs an das zweite Netzwerk dieser abgewehrt werden. Das zweite Teilnetzwerk kann insbesondere adaptiv konfiguriert werden, beispielsweise abhängig von einem Angriffstyp. Das Verfahren ist somit aufgrund des hohen Automatisierungsgrads und der schnellen Angriffsbehandlung vorteilhaft.

In einer Ausführungsform kann die Risikoinformation abhängig von mindestens einem netzwerkspezifischen Risikofaktor des ersten Teilnetzwerks generiert werden.

Ein Risikofaktor kann beispielsweise eine bekannte Schwachstelle, wie z.B. eine veraltete Software eines Geräts im ersten Teilnetzwerk, sein.

In einer vorteilhaften Ausführungsform kann das zweite Teilnetzwerk zumindest teilweise als eine Kopie des ersten Teilnetzwerks eingerichtet sein und der detektierte unzulässige Datenverkehr kann an ein Gerät des zweiten Teilnetzwerks, das einem ersten Gerät des ersten Teilnetzwerks entspricht, weitergeleitet werden.

Damit wird beispielsweise einem Angreifer lediglich vorgetäuscht, dass der Angriff auf das erste Teilnetzwerk erfolgt. Der unzulässige Datenverkehr wird allerdings vom ersten Teilnetzwerk separiert. Damit kann beispielsweise im zweiten Teilnetzwerk eine Analyse des Angriffsmusters erfolgen.

In einer Ausführungsform kann der Datenverkehr des ersten Teilnetzwerks von mindestens einem Netzwerkgerät des ersten Teilnetzwerks an eine Detektionseinheit zum Detektieren eines unzulässigen Datenverkehrs übertragen werden.

Beispielsweise kann von einem Netzwerkgerät des ersten Teilnetzwerks regelmäßig oder zu vorgegebenen Zeitpunkten eine Kopie des Datenverkehrs bzw. der Netzwerkpakete an eine Detektionseinheit, wie z.B. ein Intrusion-Detection-System, weitergeleitet werden.

In einer Ausführungsform kann der Datenverkehr des ersten Teilnetzwerks von der Steuereinheit gesteuert an die Detektionseinheit übertragen werden.

Beispielsweise kann der Netzwerkverkehr von einem Netzwerkgerät des ersten Teilnetzwerks durch die Steuereinheit des Netzwerksystems geleitet werden, so dass die Steuereinheit eine Kopie des Datenverkehrs an die Detektionseinheit weiterleiten kann.

In einer Ausführungsform kann der Datenverkehr des ersten Teilnetzwerks über eine Einwegkommunikationseinheit unidirektional an die Detektionseinheit übertragen werden.

Die Einwegkommunikationseinheit kann beispielsweise als Netzwerk-Tap oder Datendiode realisiert sein. Damit kann insbesondere eine rückwirkungsfreie Übertragung der Netzwerkkommunikation an die Detektionseinheit erzielt werden.

In einer Ausführungsform kann das zweite Teilnetzwerk virtualisiert realisiert werden.

Das zweite Netzwerk, z.B. ein sogenanntes Honeynet, kann virtualisiert realisiert sein. Dieses kann insbesondere mittels einer weiteren Steuereinheit, auch als Honeynet Controller oder Honeynet Manager bezeichnet, dynamisch konfiguriert werden.

In einer Ausführungsform kann die generierte Konfigurationsinformation anhand einer Prüfregel geprüft werden und abhängig vom Prüfergebnis an die Steuereinheit weitergeleitet werden.

Die Prüfung kann im Rahmen eines Verifikationsschrittes erfolgen. So kann die Konfiguration eines Netzwerkgeräts des ersten und/oder zweiten Teilnetzwerks beispielsweise lediglich bei positivem Prüfungsergebnis umgesetzt werden.

Gemäß einem zweiten Aspekt betrifft die Erfindung ein Netzwerksystem zur Erkennung und Abwehr netzbasierter Angriffe umfassend:
- ein erstes Teilnetzwerk,
- ein zweites Teilnetzwerk,
- eine Detektionseinheit, die derart eingerichtet ist, einen unzulässigen Datenverkehr des ersten Teilnetzwerks anhand eines vorgegebenen netzwerkspezifischen Kommunikationsmusters zu detektieren,
- einen ersten Generator, der derart eingerichtet ist, eine Risikoinformation abhängig vom detektierten unzulässigen Datenverkehr zu generieren,
- einen zweiten Generator, der derart eingerichtet ist, eine Konfigurationsinformation für das Netzwerksystem abhängig von der Risikoinformation zu generieren, wobei die Konfigurationsinformation mindestens eine Konfigurationsregel für mindestens ein Netzwerkgerät zum Umleiten des detektierten unzulässigen Datenverkehrs an das zweite Teilnetzwerk umfasst,
   und
- eine Steuereinheit, die derart eingerichtet ist, mindestens ein Netzwerkgerät des ersten Teilnetzwerks und/oder ein Netzwerkgerät des zweiten Teilnetzwerks gemäß der Konfigurationsinformation zu konfigurieren.

In einer Ausführungsform des Netzwerksystems kann das zweite Teilnetzwerk zumindest teilweise als eine Kopie des ersten Teilnetzwerks eingerichtet sein.

Die Kopie des ersten Teilnetzwerks kann insbesondere durch Infrastructure-as-Code (IaC) für Cloud Umgebungen und durch Anwendungen in einem Container, die bei Bedarf eingerichtet werden, realisiert werden.

In einer Ausführungsform der Netzwerksystems kann das zweite Teilnetzwerk virtualisiert realisiert sein.

Dies ermöglicht insbesondere, dass das zweite Teilnetzwerk nach Bedarf dynamisch konfiguriert werden kann.

In einer Ausführungsform kann das Netzwerksystem eine Einwegkommunikationseinheit umfassen, die derart eingerichtet ist, den Datenverkehr des ersten Teilnetzwerks unidirektional an die Detektionseinheit zu übertragen.

Des Weiteren betrifft die Erfindung ein Computerprogrammprodukt, das direkt in einen programmierbaren Computer ladbar ist, umfassend Programmcodeteile, die bei der Ausführung des Programms durch einen Computer diesen veranlassen, die Schritte eines erfindungsgemäßen Verfahrens auszuführen.

Ein Computerprogrammprodukt kann beispielsweise auf einem Speichermedium, wie z.B. Speicherkarte, USB-Stick, CD-ROM, DVD, ein nichtflüchtiger/dauerhaftes Speichermedium (engl. Non-transitory storage Medium) oder auch in Form einer herunterladbaren Datei von einem Server in einem Netzwerk bereitgestellt oder geliefert werden.

Ausführungsbeispiele des erfindungsgemäßen computerimplementierten Verfahrens und des Netzwerksystems sind in den Zeichnungen beispielhaft dargestellt und werden anhand der nachfolgenden Beschreibung näher erläutert. Es zeigen:
- Fig. 1: zeigt ein Ausführungsbeispiel des erfindungsgemäßen Verfahrens zur Erkennung und Abwehr netzbasierter Angriffe als Ablaufdiagramm; und
- Fig. 2: zeigt ein Ausführungsbeispiel des erfindungsgemäßen Netzwerksystems zur Erkennung und Abwehr netzbasierter Angriffe in schematischer Darstellung.

Einander entsprechende Teile sind in allen Figuren mit den gleichen Bezugszeichen versehen.

Insbesondere zeigen die nachfolgenden Ausführungsbeispiele lediglich beispielhafte Realisierungsmöglichkeiten, wie insbesondere solche Realisierungen der erfindungsgemäßen Lehre aussehen könnten, da es unmöglich und auch für das Verständnis der Erfindung nicht zielführend oder notwendig ist, all diese Realisierungsmöglichkeiten zu benennen.

Auch sind insbesondere einem (einschlägigen) Fachmann in Kenntnis des/der Verfahrensanspruchs/Verfahrensansprüche alle im Stand der Technik üblichen Möglichkeiten zur Realisierung der Erfindung selbstverständlich bekannt, sodass es insbesondere einer eigenständigen Offenbarung in der Beschreibung nicht bedarf.

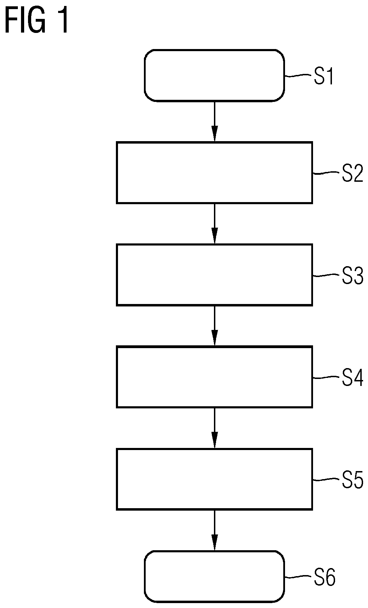

Figur 1 zeigt ein Ausführungsbeispiel des erfindungsgemäßen, computerimplementierten Verfahrens zur Erkennung und Abwehr netzbasierter Angriffe in einem Netzwerksystem. Das Netzwerksystem umfasst ein erstes Teilnetzwerk, das im Folgenden als Produktivnetzwerk bezeichnet wird, und ein zweites Teilnetzwerk, das im Folgenden als Honeynet bezeichnet wird und das vorzugsweise virtualisiert realisiert ist. Die Teilnetzwerke umfassen jeweils mindestens ein konfigurierbares Netzwerkgerät, z.B. einen konfigurierbaren Switch, und weitere Geräte. Das Produktivnetzwerk kann beispielsweise ein Netzwerk einer industriellen Anlage sein. Die Netzwerkgeräte des ersten und zweiten Teilnetzwerks werden durch eine Steuereinheit konfiguriert, d.h. das Netzwerksystem weist vorzugsweise eine Software-Defined-Network-Infrastruktur auf.

Das Netzwerksystem umfasst weiter eine Detektionseinheit, die derart eingerichtet ist, einen unzulässigen Datenverkehr oder eine Auffälligkeit der Netzwerkkommunikation des ersten Teilnetzwerks zu erkennen.

Im ersten Schritt S1 des Verfahrens wird der Datenverkehr des Produktivnetzwerks überwacht. Beispielsweise wird dazu eine Kopie des Netzwerkverkehrs erstellt und an die Detektionseinheit übermittelt. Alternativ kann eine Einwegkommunikationseinheit, wie z.B. ein Netzwerk-Tap, derart eingerichtet sein, dass der Datenverkehr vom Produktivnetzwerk abgehört oder kopiert wird und, beispielsweise unidirektional, an die Detektionseinheit weitergeleitet wird. Es kann insbesondere nicht der gesamte Datenverkehr, sondern lediglich ein vorbestimmter Teil des Datenverkehrs an die Detektionseinheit übermittelt werden.

Im nächsten Schritt S2 wird der übermittelte Datenverkehr in der Detektionseinheit anhand eines vorgegebenen netzwerkspezifischen Kommunikationsmusters auf unzulässigen Datenverkehr geprüft. Das Kommunikationsmuster ist insbesondere spezifisch für die Netzwerkkommunikation des ersten Teilnetzwerks definiert. Das Kommunikationsmuster kann ein bekanntes Angriffsmuster und/oder vorgegebene Prüfwerte umfassen. So kann ein Angriff anhand des Angriffsmusters oder aufgrund einer Abweichung von einem vorgegebenen Prüfwert erkannt werden. Beispielsweise kann sich ein Kommunikationsmuster für das Produktivnetzwerk durch vordefinierte Kommunikationsabläufe mit geringer Dynamik auszeichnen.

Wenn anhand des Kommunikationsmusters ein unzulässiger oder auffälliger Datenverkehr detektiert wird, wird von der Detektionseinheit im nächsten Verfahrensschritt S3 abhängig vom detektierten unzulässigen Datenverkehr eine Risikoinformation generiert. Die Risikoinformation umfasst insbesondere Ort, Zeit und/oder Typ der detektierten Auffälligkeit, wie z.B. eine Information zu einem kompromittierten Gerät im Produktivnetzwerk. Die Risikoinformation kann außerdem abhängig von einem netzwerkspezifischen Risikofaktor des Produktivnetzwerks generiert werden. Die Kombination mehrerer Risikofaktoren kann einen Risikowert bilden.

Wenn die Detektionseinheit keine Auffälligkeit oder einen unzulässigen Datenverkehr detektiert kann beispielsweise lediglich eine Statusmeldung ausgegeben werden.

Abhängig von der generierten Risikoinformation wird im nächsten Verfahrensschritt S4 eine Konfigurationsinformation für das Netzwerksystem generiert. Die Konfigurationsinformation umfasst mindestens eine Konfigurationsregel für mindestens ein Netzwerkgerät des ersten und/oder des zweiten Teilnetzwerks zum Umleiten des detektierten unzulässigen oder auffälligen Datenverkehrs vom ersten Teilnetzwerk an das zweite Teilnetzwerk. Die Konfigurationsinformation wird der Steuereinheit des Netzwerksystems übermittelt. So kann eine Rekonfiguration des Netzwerksystems abhängig von der Detektion einer Auffälligkeit oder eines Angriffs erzielt werden.

Im nächsten Verfahrensschritt S5 wird gemäß der Konfigurationsinformation mindestens ein Netzwerkgerät des Produktivnetzwerks und/oder mindestens ein Netzwerkgerät des Honeynet derart durch die Steuereinheit konfiguriert, dass der unzulässige oder auffällige Datenverkehr an das Honeynet weitergeleitet wird.

Dabei ist ein Vorteil der Erfindung, dass nicht generell eine Route des Internet Protocols zu einem angegriffenen System abgeändert wird und damit der Angriffsverkehr und der produktive Verkehr gemeinsam zum Honeypot, d.h. zu einem Netzwerkgerät des Honeynets, umgeleitet werden, sondern durch das Software-Defined-Network ist es möglich, selektiv nur eine Umleitung des vermuteten Angreifers, d.h. des unzulässigen oder auffälligen Datenverkehrs, vorzunehmen.

Vorzugsweise ist das Honeynet als Kopie des Produktivnetzwerks realisiert, so dass der detektierte unzulässige oder auffällige Datenverkehr über ein Netzwerkgerät des Honeynets an ein Gerät des Honeynets, das dem betroffenen Gerät des Produktivnetzwerks entspricht, umgeleitet wird, Schritt S6.

Beispielsweise kann es sich um einen Angriff auf ein Gerät des Produktivnetzes handeln. Dieser kann durch die Detektionseinheit erkannt werden. Durch die Rekonfiguration wird erreicht, dass der Zugriff des Angreifers auf die Kopie des Geräts im Honeynet umgeleitet wird. Somit wird der Angriff abgewehrt.

Im Folgenden kann der umgeleitete Datenverkehr im Honeynet weiter analysiert werden. Beispielsweise kann zeitgleich zum Betrieb des Produktivnetzwerks eine isolierte Angriffsanalyse durchgeführt werden, während das Produktivnetzwerk ohne Einschränkungen weiter betrieben werden kann.

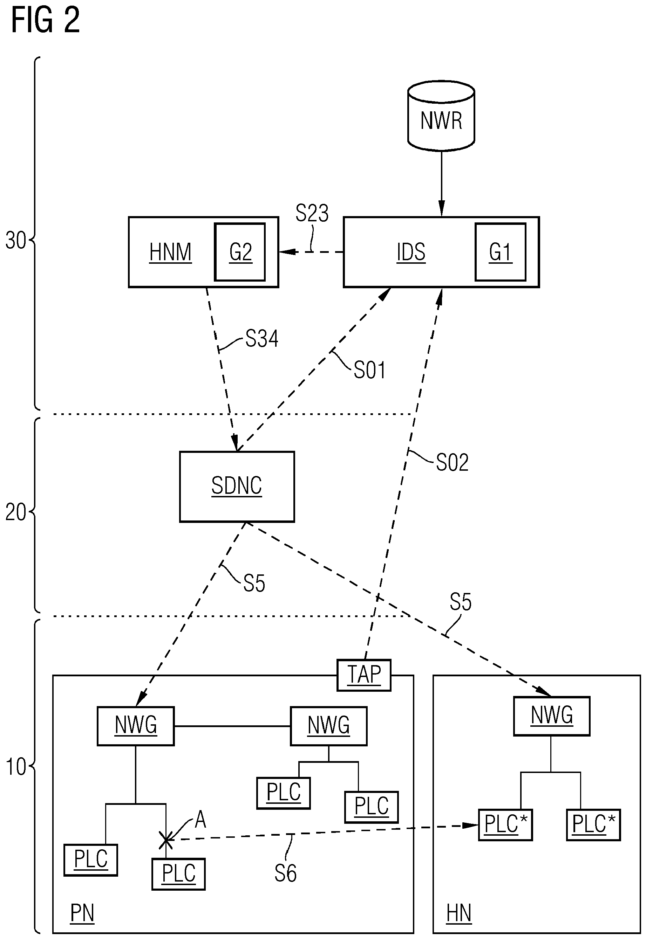

Figur 2 zeigt ein Ausführungsbeispiel des erfindungsgemäßen Netzwerksystems in schematischer Darstellung. Das Netzwerksystem umfasst ein erstes Teilnetzwerk PN und ein zweites Teilnetzwerk HN. Das Netzwerksystem umfasst weiter eine Steuereinheit SDNC, die derart eingerichtet ist, Netzwerkgeräte NWG des ersten und/oder zweiten Teilnetzwerks zu steuern, zu verwalten und/oder zu konfigurieren. Das Netzwerksystem weist eine Software-Defined-Netzwerk-Konfiguration auf, d.h. es ist in eine sogenannte Datenebene 10 (engl. Data plane), eine Steuerebene 20 (engl. Control Plane) und eine Applikationsebene 30 gegliedert. Die Datenebene 10 ist für das Weiterleiten von Netzwerkpaketen verantwortlich, während die Steuerung und/oder die Konfiguration der Netzinfrastruktur durch die Steuerebene 20, d.h. über die Kommunikation zwischen der Steuereinheit SDNC und den Netzwerkgeräten NWG, erfolgt. Die Infrastruktur ermöglicht eine zentrale Erkennung von illegitimen Nachrichten und eine dynamische Konfiguration eines Honeynets.

Das erste Teilnetzwerk PN ist beispielsweise ein produktives Automatisierungsnetzwerk. Das zweite Teilnetzwerk HN ist beispielsweise ein Honeynet. Das Honeynet HN ist vorzugsweise zumindest zum Teil als Kopie des Automatisierungsnetzes und virtualisiert und/oder nach Bedarf dynamisch realisiert. Das Honeynet HN kann alternativ vorkonfiguriert sein. Beispielsweise kann das Honeynet in einer cloud-basierten Infrastruktur realisiert werden. Insbesondere kann das Honeynet HN über einen Honeynet Manager HNM gesteuert bzw. konfiguriert werden. Der Honeynet Manager ist beispielsweise eine Applikation, die Steuerbefehle zum Setzen von Regeln an die Steuereinheit SDNC übermittelt.

Zur Erkennung von unzulässigem oder auffälligen Datenverkehr umfasst das Netzwerksystem eine Detektionseinheit IDS. Die Detektionseinheit IDS ist derart eingerichtet, Datenpakete des ersten Teilnetzwerks PN anhand von beispielsweise vorkonfigurierten Regeln und Signaturen zu prüfen und so netzbasierte Angriffe oder Auffälligkeiten zu erkennen. Die Detektionseinheit IDS kann beispielsweise als Applikation eingerichtet sein. Der Detektionseinheit wird vorzugsweise ein netzwerkspezifisches Kommunikationsmuster bereitgestellt, Schritt S01. Beispielsweise beschreibt die Steuereinheit SDNC des Netzwerksystems ein zulässiges Kommunikationsmuster NWR, das z.B. Regeln und Signaturen umfasst. Alternativ kann ein Kommunikationsmuster NWR in einer Speichereinheit gespeichert und von dort aus eingelesen werden.

Zur Laufzeit des produktiven Automatisierungsnetzwerks PN wird der Netzwerkverkehr von den Netzwerkgeräten NWG, z.B. Switchen, an die Detektionseinheit IDS weitergeleitet und von dieser kontinuierlich, z.B. regelbasiert anhand des bereitgestellten Kommunikationsmusters NWR, analysiert. Wenn der Netzwerkverkehr an die Steuereinheit SDNC weitergeleitet wird, kann auch von dieser eine Kopie der Netzwerkpakete an die Detektionseinheit IDS geschickt werden. Zusätzlich oder alternativ kann mittels einer Einwegkommunikationseinheit TAP der Datenverkehr des produktiven Automatisierungsnetzes PN erfasst und an die Detektionseinheit IDS weitergeleitet werden.

In der Detektionseinheit IDS erfolgt ein Abgleich mit dem vordefinierten, bekannten Kommunikationsmuster NWR und einem Infrastruktur-spezifischen Regel/Signatursatz, der neben Heuristiken auch Signaturen von Malware prüfen kann. Abhängig vom detektierten unzulässigen oder auffälligen Datenverkehr wird von einem ersten Generator G1 eine Risikoinformation generiert. Der erste Generator G1 ist beispielsweise als Teil der Detektionseinheit IDS oder separat, z.B. als Applikation, realisiert. Die Risikoinformation umfasst vorzugsweise Informationen, die den detektierten Angriff beschreiben, wie z.B. eine Ortsinformation, Zeitinformation und/oder einen Risikowert.

Wenn eine Unregelmäßigkeit, eine Auffälligkeit und/oder ein Angriff A im produktiven Automatisierungsnetzwerk PN erkannt wird, z.B. wenn ein Risikowert einen definierten Schwellwert überschreitet, sendet die Detektionseinheit IDS eine Warnmeldung S23 an den Honeynet Manager HNM. Die Warnmeldung S23 umfasst vorzugsweise die Risikoinformation. Abhängig von der Warnmeldung S23 sendet der Honeynet Manager HNM einen Steuerbefehl S34 an die Steuereinheit SDNC, um eine Rekonfiguration des Netzwerksystems abhängig von der Detektion der Auffälligkeit und/oder des Angriffs A zu veranlassen. Dazu wird von einem zweiten Generator G2 in Abhängigkeit der Risikoinformation eine Konfigurationsinformation für das Netzwerksystem generiert. Der zweite Generator G2 kann insbesondere als Teil des Honeynet-Managers HNM oder separat realisiert sein. Die generierte Konfigurationsinformation umfasst mindestens eine Konfigurationsregel für mindestens ein Netzwerkgerät NWG des produktiven Automatisierungsnetzwerks und/oder des Honeynets HN zum Umleiten des detektierten unzulässigen oder auffälligen Datenverkehrs an das Honeynet HN.

Die Steuereinheit SDNC steuert die Datenebene 10, d.h. die physische Netzwerkschicht, an und konfiguriert S5 diese, d.h. mindestens ein Netzwerkgerät NWG, gemäß der mindestens einen Konfigurationsregel derart, dass der detektierte unzulässige oder auffällige Datenverkehr aufgrund des Angriffs A in das Honeynet HN umgeleitet wird.

Vorzugsweise wird die generierte Konfigurationsinformation anhand einer vorgegebenen Prüfregel geprüft, bevor die Steuereinheit SDNC die Datenebene 10 rekonfiguriert. Die Konfiguration der Datenebene 10 kann beispielsweise lediglich bei positiver Verifikation der Konfigurationsinformation durchgeführt werden. Dies vermeidet bei sogenannten False Positives, d.h. wenn beispielsweise die Detektion von Angriffen basierend auf Heuristiken fehlerhaft ist, eine automatische Konfiguration des Netzwerksystems. Alternativ erstellt der Honeynet-Managers HNM Steuerbefehle und Regeln für die Rekonfiguration des Netzes, d.h. als Eingabe für die Steuereinheit SDNC, die jedoch nicht automatisiert, sondern erst nach Prüfung und Freigabe weitergeleitet und implementiert werden.

Bei einem Angriff A auf eine Steuerung PLC eines Geräts im produktiven Automatisierungsnetzwerk PN wird demnach der unzulässige Datenverkehr anstatt an die Steuerung PLC an eine Kopie der Steuerung PLC* im Honeynet HN umgeleitet S6. Vorzugsweise ist das Honeynet HN durch den Honeynet-Manager HNM derart konfiguriert, dass es zumindest teilweise eine Kopie des produktiven Automatisierungsnetzwerks PN darstellt. So kann der unzulässige Datenverkehr vom produktiven Automatisierungsnetzwerk PN separiert und im Honeynet HN analysiert werden, ohne dass der Angreifer bemerkt, dass sein Angriff entdeckt wurde und reagiert.

Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Computerimplementiertes Verfahren zur Erkennung und Abwehr netzbasierter Angriffe in einem Netzwerksystem, das ein erstes Teilnetzwerk (PN), ein zweites Teilnetzwerk (HN) und eine Steuereinheit (SDNC) zum Konfigurieren von Netzwerkgeräten (NWG) des ersten Teilnetzwerks und des zweiten Teilnetzwerks umfasst, mit den Schritten:
- Detektieren (S2) eines unzulässigen Datenverkehrs des ersten Teilnetzwerks anhand eines vorgegebenen netzwerkspezifischen Kommunikationsmusters,
- Generieren (S3) einer Risikoinformation abhängig vom detektierten unzulässigen Datenverkehr,
- Generieren (S4) einer Konfigurationsinformation für das Netzwerksystem abhängig von der Risikoinformation, wobei die Konfigurationsinformation mindestens eine Konfigurationsregel für mindestens ein Netzwerkgerät (NWG) zum Umleiten des detektierten unzulässigen Datenverkehrs an das zweite Teilnetzwerk (HN) umfasst,
und
- Konfigurieren (S5) von mindestens einem Netzwerkgerät (NWG) des ersten Teilnetzwerks und/oder einem Netzwerkgerät (NWG) des zweiten Teilnetzwerks durch die Steuereinheit (SDNC) gemäß der Konfigurationsinformation, derart, dass der detektierte unzulässige Datenverkehr an das zweite Teilnetzwerk (HN) geleitet wird.

2. Computerimplementiertes Verfahren nach Anspruch 1, wobei die Risikoinformation abhängig von mindestens einem netzwerkspezifischen Risikofaktor des ersten Teilnetzwerks (PN) generiert wird.

3. Computerimplementiertes Verfahren nach einem der vorhergehenden Ansprüche, wobei das zweite Teilnetzwerk (HN) zumindest teilweise als eine Kopie des ersten Teilnetzwerks (PN) eingerichtet ist und der detektierte unzulässige Datenverkehr an ein Gerät (PLC*) des zweiten Teilnetzwerks, das einem ersten Gerät (PLC) des ersten Teilnetzwerks entspricht, weitergeleitet wird.

4. Computerimplementiertes Verfahren nach einem der vorhergehenden Ansprüche, wobei der Datenverkehr des ersten Teilnetzwerks von mindestens einem Netzwerkgerät (NWG) des ersten Teilnetzwerks an eine Detektionseinheit (IDS) zum Detektieren eines unzulässigen Datenverkehrs übertragen wird.

5. Computerimplementiertes Verfahren nach einem der vorhergehenden Ansprüche, wobei der Datenverkehr des ersten Teilnetzwerks von der Steuereinheit (SDNC) gesteuert an die Detektionseinheit (IDS) übertragen wird (S01).

6. Computerimplementiertes Verfahren nach einem der vorhergehenden Ansprüche, wobei der Datenverkehr des ersten Teilnetzwerks über eine Einwegkommunikationseinheit (TAP) unidirektional an die Detektionseinheit (IDS) übertragen wird (S02) .

7. Computerimplementiertes Verfahren nach einem der vorhergehenden Ansprüche, wobei das zweite Teilnetzwerk (HN) virtualisiert realisiert wird.

8. Computerimplementiertes Verfahren nach einem der vorhergehenden Ansprüche, wobei die generierte Konfigurationsinformation anhand einer Prüfregel geprüft wird und abhängig vom Prüfergebnis an die Steuereinheit (SDNC) weitergeleitet wird.

9. Netzwerksystem zur Erkennung und Abwehr netzbasierter Angriffe umfassend:
- ein erstes Teilnetzwerk (PN),
- ein zweites Teilnetzwerk (HN),
- eine Detektionseinheit (IDS), die derart eingerichtet ist, einen unzulässigen Datenverkehr des ersten Teilnetzwerks anhand eines vorgegebenen netzwerkspezifischen Kommunikationsmusters zu detektieren,
- einen ersten Generator (G1), der derart eingerichtet ist, eine Risikoinformation abhängig vom detektierten unzulässigen Datenverkehr zu generieren,
- einen zweiten Generator (G2), der derart eingerichtet ist, eine Konfigurationsinformation für das Netzwerksystem abhängig von der Risikoinformation zu generieren, wobei die Konfigurationsinformation mindestens eine Konfigurationsregel für mindestens ein Netzwerkgerät (NWG) zum Umleiten des detektierten unzulässigen Datenverkehrs an das zweite Netzwerk (HN) umfasst,
und
- eine Steuereinheit (SDNC), die derart eingerichtet ist, mindestens ein Netzwerkgerät (NWG) des ersten Teilnetzwerks und/oder ein Netzwerkgerät des zweiten Teilnetzwerks gemäß der Konfigurationsinformation zu konfigurieren.

10. Netzwerksystem nach Anspruch 9, wobei das zweite Netzwerk (HN) zumindest teilweise als eine Kopie des ersten Teilnetzwerks eingerichtet ist.

11. Netzwerksystem nach Anspruch 9 oder 10, wobei das zweite Teilnetzwerk (HN) virtualisiert realisiert ist.

12. Netzwerksystem nach einem der Ansprüche 9 bis 11, wobei das Netzwerksystem eine Einwegkommunikationseinheit (TAP) umfasst, die derart eingerichtet ist, den Datenverkehr des ersten Teilnetzwerks unidirektional an die Detektionseinheit (IDS) zu übertragen.

13. Computerprogrammprodukt umfassend Programmcodeteile, die bei der Ausführung des Programms durch einen Prozessor diesen veranlassen, die Schritte des Verfahrens nach einem der Ansprüche 1 bis 8 auszuführen.
